# EUROPÄISCHE PATENTSCHRIFT

(11) **EP 4 202 224 B1**
(45) Veröffentlichungstag und Bekanntmachung des Hinweises auf die Patenterteilung: **02.07.2025**
(21) Anmeldenummer: 22203984.4
(22) Anmeldetag: 27.10.2022
(51) Int. Cl.: F04D 13/10, H02K 3/12, H02K 15/067

(54) **BOHRLOCHPUMPE**
DOWNHOLE PUMP
POMPE DE FOND DE TROU

(30) Priorität: 22.12.2021 LU 102894
(43) Veröffentlichungstag der Anmeldung: 28.06.2023
(73) Patentinhaber: WILO SE, 44263 Dortmund (DE)
(72) Erfinder: Höke, Daniel, 44263 Dortmund (DE); Drubel, Oliver, 44263 Dortmund (DE); Kohler, Henry, 44263 Dortmund (DE); Ummelmann, Roland, 44263 Dortmund (DE); Döhler, Heiko, 44263 Dortmund (DE); Unger, Heiko, 44263 Dortmund (DE); Netsch, Volker, 44263 Dortmund (DE); Meier-Wagner, Michael, 44263 Dortmund (DE); Vogt, Martin, 44263 Dortmund (DE)
(74) Vertreter: Michalski Hüttermann & Partner Patentanwälte mbB

(56) Entgegenhaltungen:
- DE-A1- 102015 226 010
- GB-A- 2 542 107
- JP-A- 2013 183 543
- US-A1- 2006 175 064

## Beschreibung

### Technisches Gebiet

Die Erfindung betrifft eine Bohrlochpumpe mit einem sich axial erstreckenden Stator, einem in dem Stator angeordneten und von dem Stator radial umschlossenen sich axial erstreckenden Rotor und einer Mehrzahl Spulen mit jeweils einem ersten axialen Spulenende und einem gegenüberliegenden zweiten axialen Spulenende, wobei an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende, die Spulen aufnehmende Nuten ausgebildet sind.

Die Erfindung betrifft zudem ein Verfahren zum Aufbringen einer Mehrzahl Spulen mit jeweils einem ersten axialen Spulenende und einem gegenüberliegenden zweiten axialen Spulenende auf einen sich axial erstreckenden Stator einer Bohrlochpumpe mit einem in dem Stator angeordneten und von dem Stator radial umschlossenen sich axial erstreckenden Rotor, wobei an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende Nuten zum Aufnehmen der Spulen ausgebildet sind.

### Hintergrund der Erfindung

Bohrlochpumpen sind aus dem Stand der Technik bekannt und dienen zur Förderung eines Fluids wie beispielsweise Wasser oder Erdöl insbesondere aus unterirdischen Vorkommen. Derartige Bohrlochpumpen werden des Öfteren in ein Bohrloch bis zum Eintauchen in das Fluid oder in eine fluidführende Bodenschicht abgesenkt und verbleiben dort.

Das Herstellen solcher Bohrlochpumpen insbesondere der Spulen eines Motors derselben ist aufwendig und insofern kostenintensiv, was insbesondere für die Verwendung teurer isolierter Seekabel für Windungen der Spulen gilt. Aufgrund des begrenzten Bauraums der Bohrlochpumpen zum Verwenden in Bohrlöchern mit geringen Durchmessern dauert es bis zu 16 Stunden, um die Spulen für eine Bohrlochpumpe herzustellen. Da isoliertes Seekabel bei höheren Temperaturen klebrig wird, ist das Einbringen der Windungen in einen Stator der Bohrlochpumpe aufwendig und führt nicht selten zu Fehlern. Eine Reparatur einer defekten Windung bzw. Spule scheidet aufgrund des begrenzten Bauraums oftmals aus. Ebenso ist eine Reparatur im laufenden Betrieb aufgrund der Installation im Bohrloch selten möglich.

US 2006/175064 A1 beschreibt eine elektrische Tauchpumpe umfassend einen Wechselstrom-Permanentmagnetmotor mit drei oder mehr Phasen und eine Antriebsschaltung, um allen Phasen des Motors gleichzeitig unterschiedliche Antriebssignale zuzuführen.

JP 2013 183543 A beschreibt eine Wickelvorrichtung umfassend einen leitungsseitigen Spulenkörper zur Bildung eines geplanten leitungsseitigen Spulenendes und einen antileitungsseitigen Spulenkörper zur Bildung eines geplanten leitungsseitigen Spulenendes.

### Beschreibung der Erfindung

Ausgehend von dieser Situation ist es eine Aufgabe der vorliegenden Erfindung, eine Bohrlochpumpe und ein entsprechendes Herstellungsverfahren anzugeben, womit eine Bohrlochpumpe einfacher und kostengünstiger herstellbar und reparierbar ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Bohrlochpumpe mit einem sich axial erstreckenden Stator, einem in dem Stator angeordneten und von dem Stator radial umschlossenen sich axial erstreckenden Rotor und einer Mehrzahl Spulen mit jeweils einem ersten axialen Spulenende und einem gegenüberliegenden zweiten axialen Spulenende, wobei
an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende, die Spulen aufnehmende Nuten ausgebildet sind,
das jeweilige zweite axiale Spulenende im Bereich des zweiten axialen Spulenendes gebogen und dadurch gegenüber dem ersten axialen Spulenende hin zum Rotor radial versetzt zum radialen Umschließen wenigstens eines Zahns angeordnet ist, und
das jeweilige erste axiale Spulenende wenigstens ein erstes axiales Zahnende und das jeweilige zweite axiale Spulenende wenigstens ein zweites axiales Zahnende axial umschließt.

In einer alternativen Ausgestaltung wird die Aufgabe durch einen Motor insbesondere für eine Pumpe mit einem sich axial erstreckenden Stator, einem in dem Stator angeordneten und von dem Stator radial umschlossenen sich axial erstreckenden Rotor und einer Mehrzahl Spulen mit jeweils einem ersten axialen Spulenende und einem gegenüberliegenden zweiten axialen Spulenende gelöst, wobei
an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende, die Spulen aufnehmende Nuten ausgebildet sind,
das jeweilige zweite axiale Spulenende im Bereich des zweiten axialen Spulenendes gebogen und dadurch gegenüber dem ersten axialen Spulenende hin zum Rotor radial versetzt zum radialen Umschließen wenigstens eines Zahns angeordnet ist, und
das jeweilige erste axiale Spulenende wenigstens ein erstes axiales Zahnende und das jeweilige zweite axiale Spulenende wenigstens ein zweites axiales Zahnende axial umschließt.

Ein wesentlicher Aspekt der vorgeschlagenen Bohrlochpumpe liegt darin, dass die Spulen axial auf den Stator aufschiebbar sind und entsprechend auch von dem Stator wieder herunterschiebbar zum Entnehmen derselben in axialer Richtung sind. Insofern ist es möglich, die Spulen auch außerhalb des Stators herzustellen und erst nach erfolgter fertiger Wicklung auf den Stator aufzubringen. Derart wird einerseits eine Herstellungszeit der Bohrlochpumpe wesentlich verringert und andererseits wird es möglich, defekte Spulen im Betrieb auszutauschen. Denn da das zweite axiale Spulenende radial versetzt zum Umschließen wenigstens eines Zahns angeordnet ist, lässt sich die gewickelte Spule mit dem zweiten axialen Spulenende voran in zwei Nuten einschieben, bis das das erste axiale Spulenende an dem ersten axialen Zahnende zu liegen kommt, und entsprechend wieder von dem Stator entfernen.

Die Bohrlochpumpe, auch unter Wassermotorpumpe oder Vertikalpumpe genannt, lässt sich in enge Bohrlöcher oder Brunnen mit einem geringen Innendurchmesser einsetzen. Dazu weist die Bohrlochpumpe bevorzugt ein zylinderartiges Gehäuse bzw. ist in Form eines Zylinders gestaltet, welcher Zylinder in das Bohrloch einführbar ist. Entsprechend ist der Stator ebenso bevorzugt nach Art eines Zylinders gestaltet. Der Rotor treibt bevorzugt ein Laufrad zum Fördern eines Fluids an. Grundsätzlich lassen sich mit der Bohrlochpumpe unterschiedliche Fluide wie Wasser, Abwasser oder Erdöl fördern. Die Spulen weisen bevorzugt eine Mehrzahl Windungen auf und/oder weisen in Draufsicht eine rechteckartige Form auf, die sich zwischen den ersten axialen Spulenende und im zweiten axialen Spulenende erstreckt. Der Stator bzw. die Bohrlochpumpe kann einen vorzugsweise kreisrunden Innendurchmesser und/oder einen Innendurchmesser von 10, 20, 30, 40 oder 50 cm haben. Entsprechend können die Zähnen innenseitig bevorzugt einen kreisrunden Durchmesser des Stators ausbilden. Die Bohrlochpumpe kann als Kreiselpumpe ausgestaltet sein.

Die Zähne erstrecken sich bevorzugt vollständig zwischen beiden gegenüberliegenden axialen Zahnenden. In einer Nut sind bevorzugt Windungen zweier Spulen angeordnet. Dazu springen die Nuten bevorzugt radial in Bezug auf den Rotor zurück. Bevorzugt sind die Nuten annähernd vollständig, bevorzugt vollständig durch die Windungen ausgefüllt. Das zweite Spulenende ist bevorzugt derart hin zum Rotor gebogen, dass durch die Biegung wenigstens ein Zahn dann umschließbar ist, wenn die Spule in den Nuten angeordnet ist. Mit anderen Worten weist die Biegung bevorzugt einen Negativform des wenigsten einen Zahns auf. Beim Aufschieben der derart gebogenen bzw. abgewinkelten Spule auf den wenigstens einen Zahn steht der wenigstens eine Zahn der Spule nicht entgegen. Die Windungen sind bevorzugt aus isoliertem Draht und/oder Seekabel gestaltet. Die Windungen können einen kreisförmigen, quaderartigen oder quadratischen Querschnitt aufweisen. Die Spulen und/oder Windungen sind bevorzugt aus Draht, insbesondere isolierend ummanteltem Draht, beispielsweise Lackdraht hergestellt und/oder sind gebogen, insbesondere L-förmig gebogen. Weiter bevorzugt sind die Windungen nicht gusstechnisch hergestellt, beispielsweise nicht gegossen und/oder gussfrei hergestellt, insbesondere gussfrei. Der Motor findet bevorzugt Verwendung für eine Pumpe, insbesondere für eine Kreiselpumpe, ganz besonders bevorzugt als Bohrlochpumpe.

Gemäß einer bevorzugten Weiterbildung ist das jeweilige erste axiale Spulenende und/oder das jeweilige zweite axiale Spulenende axial außerhalb der Nuten und/oder der Zähne und/oder das jeweilige zweite axiale Spulenende radial außerhalb der Nuten und/oder der Zähne angeordnet. Nach dem vollständigen Einschieben der Spulen in den Nuten kommt das zweite axiale Spulenende in axialer Draufsicht bevorzugt neben den Zähnen zu liegen. Axial außerhalb der Nuten und/oder der Zähne meint insbesondere, dass die Zähne, in axialer Draufsicht auf die Spule, durch die Spule umlaufend eingefasst sind.

Nach einer anderen bevorzugten Ausgestaltung ist das jeweilige zweite axiale Spulenende im Bereich des zweiten axialen Spulenendes orthogonal in Richtung des Rotors gebogen. Bevorzugt weist die Spule zwischen ihren axialen Spulenende eine Längserstreckung auf, die größer als die Längserstreckung der Nuten bzw. Zähne ist. Die Spule kann eine Mehrzahl Windungen umfassen, die übereinander und/oder nebeneinander angeordnet sind. Entsprechend können im Bereich des zweiten axialen Spulenendes einzelne Windungen unterschiedlich lang radial versetzt angeordnet sein. Beispielsweise kann eine näher zum Rotor angeordnete Windung im Bereich des zweiten axialen Spulenendes wesentlich weniger radial versetzt gestaltet sein, während eine weiter zum Rotor angeordnete Windung demgegenüber mehr radial versetzt gestaltet ist, sodass beide Windungen der Spule, beim axialen Einführen in die Nuten, mit ihrem zweiten radial versetzten axialen Spulenendungen über den wenigstens ein Zahn ,gleiten' können. In axialer Seitansicht können die Spulen derart eine L-Form aufweisen.

Gemäß einer bevorzugten Weiterbildung umschließt das erste axiale Spulenende und/oder das zweite axiale Spulenende das wenigstens eine erste axiale Zahnende und/oder das wenigstens eine zweite Zahnende axial berührend und/oder ist das jeweilige zweite axiale Spulenende zum radialen berührenden Umschließen wenigstens eines Zahns angeordnet. Berührend kann in diesem Zusammenhang auch bedeuten, dass die Spule möglichst eng an dem Zahn anliegt.

Nach einer anderen bevorzugten Ausgestaltung nehmen die Nuten die Spulen passgenau auf und/oder weisen die Nuten in radialer Richtung einen dreieckartigen und/oder V-förmigen Querschnitt auf. Bevorzugt sind in jeder Nut eine Mehrzahl Windungen von jeweils zwei Spulen vorgesehen, die jeweils über eine komplette axiale Erstreckung innerhalb der Nut angeordnet sind. Bevorzugt sind die Spulen im Bereich des Stators nur innerhalb der Nuten vorgesehen und erstrecken sich radial nicht über die Zähne hinaus in Richtung des Rotors. Die Mehrzahl Windungen sind bevorzugt in axialer Richtung übereinander angeordnet, insbesondere, bei dreieckartigen und/oder V-förmigen Querschnitt der Nuten, ebenso dreieckartig und/oder V-förmig in Seitansicht.

Gemäß einer bevorzugten Weiterbildung sind die Spulen im Bereich des ersten axialen Spulenendes und/oder im Bereich des zweiten axialen Spulenendes überlappend und/oder ineinander verschachtelt angeordnet sind, insbesondere außerhalb des Stators, und/oder weisen die Spulen eine rechteckartige Form auf. Die Bohrlochpumpe ist bevorzugt als Drei-Phasen-Pumpe gestaltet, so dass Wicklungen der einzelnen Phasen nacheinander in regelmäßigen Abständen die Nuten eingebracht sein können und sich im Bereich des ersten axialen Spulenendes und/oder im Bereich des zweiten axialen Spulenendes insbesondere außerhalb des Stators überlappend und/oder ineinander verschachtelt angeordnet sind. Bevorzugt weist der Stator 6, 9, 12 oder 15 Nuten und eine entsprechende Anzahl Zähne bzw. Windungen auf. Der Stator kann von einem Gehäuse umgeben sein oder als Gehäuse der Bohrlochpumpe gestaltet sein.

Die Aufgabe der Erfindung wird weiterhin gelöst durch ein Verfahren zum Aufbringen einer Mehrzahl Spulen mit jeweils einem ersten axialen Spulenende und einem gegenüberliegenden zweiten axialen Spulenende auf einen sich axial erstreckenden Stator einer Bohrlochpumpe mit einem in dem Stator angeordneten und von dem Stator radial umschlossenen sich axial erstreckenden Rotor, wobei
an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende Nuten zum Aufnehmen der Spulen ausgebildet sind, mit den Schritten:
Biegen der jeweiligen zweiten axialen Spulenendes im Bereich des zweiten axialen Spulenendes, bis dass das zweite axiale Spulenende gegenüber dem ersten axialen Spulenende hin zum Rotor radial versetzt zum radialen Umschließen wenigstens eines Zahns angeordnet ist, und
Aufschieben der jeweiligen Spule in axialer Richtung mit dem gebogenen zweiten axialen Spulenendes voran in wenigstens zwei Nuten, bis dass das jeweilige erste axiale Spulenende wenigstens ein erstes axiales Zahnende und das jeweilige zweite axiale Spulenende wenigstens ein zweites axiales Zahnende axial umschließt.

In einer alternativen Ausgestaltung wird die Aufgabe durch ein Verfahren zum Aufbringen einer Mehrzahl Spulen mit jeweils einem ersten axialen Spulenende und einem gegenüberliegenden zweiten axialen Spulenende auf einen sich axial erstreckenden Stator eines Motors insbesondere für eine Pumpe mit einem in dem Stator angeordneten und von dem Stator radial umschlossenen sich axial erstreckenden Rotor, wobei
an dem Stator abwechselnd eine Mehrzahl sich axial erstreckender, dem Rotor zugewandter Zähne mit jeweils einem ersten axialen Zahnende und einem gegenüberliegenden zweiten axialen Zahnende und zwischen zwei benachbarten Zähnen radial zurückspringende sich axial erstreckende Nuten zum Aufnehmen der Spulen ausgebildet sind, mit den Schritten:
Biegen der jeweiligen zweiten axialen Spulenendes im Bereich des zweiten axialen Spulenendes, bis dass das zweite axiale Spulenende gegenüber dem ersten axialen Spulenende hin zum Rotor radial versetzt zum radialen Umschließen wenigstens eines Zahns angeordnet ist, und
Aufschieben der jeweiligen Spule in axialer Richtung mit dem gebogenen zweiten axialen Spulenendes voran in wenigstens zwei Nuten, bis dass das jeweilige erste axiale Spulenende wenigstens ein erstes axiales Zahnende und das jeweilige zweite axiale Spulenende wenigstens ein zweites axiales Zahnende axial umschließt.

Durch das vorgeschlagene Verfahren lässt sich einerseits die jeweilige Spule einzelnen oder alle Spulen gemeinsam in besonders einfacher Weise von einer Querseite des Stators in diesen einbringen, nämlich insbesondere in wenigstens zwei Nuten in axialer Richtung einschieben. Im Gegensatz zu aus dem Stand der Technik bekannten Spulen, die entweder in die Nuten eingewickelt oder zunächst in einen freien Bereich des Stators eingebracht und dann radial nach außen in die Nuten eingedrückt wurden, erlaubt das vorgeschlagene Verfahren die Spulen direkt von der Querseite des Stators die Spulen in die Nuten einzuschieben. Bedingt dadurch lässt sich eine defekte Spule oder alle Spulen gemeinsam durch axiales Herausschieben aus dem Stator entfernen, selbst wenn die Bohrlochpumpe in einem Bohrloch angeordnet ist. Bei den aus dem Stand der Technik bekannten Ausgestaltungen ist dies nicht möglich. Beim Aufschieben gleitet das gebogene zweite axiale Spulenende bevorzugt über wenigstens einen Zahn, während ein nicht gebogener Teil der Spule durch die wenigstens zwei Nuten gleitet.

Nach einer bevorzugten Weiterbildung umfasst das Verfahren den Schritt:
Wickeln von Wicklungen zum Erhalten der gebogenen Spule derart, dass nach dem Aufschieben das jeweilige erste axiale Spulenende wenigstens ein erstes axiales Zahnende axial umschließen kann, das jeweilige zweite axiale Spulenende wenigstens ein zweites axiales Zahnende axial umschließen kann und das jeweilige zweite axiale Spulenende im Bereich des jeweiligen zweiten axialen Zahnendes wenigstens einen Zahn radial in Richtung des Rotors umschließen kann.

Mit anderen Worten erfolgt das Wickeln bevorzugt derart, dass das gebogene zweite axiale Spulenende in Seitansicht wenigstens einen Zahn insbesondere U-förmig umgreift. Das Wickeln erfolgt weiter bevorzugt derart, dass eine axiale Erstreckung der Spule größer, annähernd gleich oder gleich der radialen Erstreckung der Zähne bzw. Nuten ist.

Gemäß einer anderen bevorzugten Weiterbildung umfasst das Verfahren den Schritt:
Anordnen des jeweiligen ersten axialen Spulenendes und/oder des jeweiligen zweiten axialen Spulenende derart, dass das erste axiale Spulenende und/oder das zweite axiale Spulenende axial außerhalb der Nuten und/oder der Zähne zu liegen kommt, und/oder des jeweiligen zweiten axialen Spulenende derart, dass das zweite axiale Spulende radial außerhalb der Nuten und/oder der Zähne zu liegen kommt.

Nach einer bevorzugten Weiterbildung umfasst das Verfahren den Schritt:
Biegen des jeweiligen zweiten axialen Spulenenden orthogonal in Richtung des Rotors.

Das Biegen erfolgt bevorzugt derart, dass das zweite axiale Spulenende orthogonal zum ersten axialen Spulenende angeordnet ist. Bevorzugt wird nur ein geringer Teil der Spule gebogen, sodass sich die Spule hauptsächlich in axialer Richtung und nur hinsichtlich des wenigstens einen Zahns in radialer Richtung erstreckt.

Gemäß einer anderen bevorzugten Weiterbildung umfasst das Verfahren den Schritt:
Anordnen der Spulen im Bereich des ersten axialen Spulenendes und/oder im Bereich des zweiten axialen Spulenendes überlappend und/oder ineinander verschachtelt und/oder in einer rechteckartigen Form.

Nach einer bevorzugten Weiterbildung umfasst das Verfahren den Schritt:
Laminieren der gebogenen Spule in einer Gießform zum Erhalten der gebogenen Spule.

Weitere Ausgestaltungen und/oder Vorteile des Verfahrens ergeben sich für den Fachmann in Analoge zu der zuvor beschriebenen Bohrlochpumpe. Die Ausführungen zu der Bohrlochpumpe gelten analog für den Motor.

### Kurze Beschreibung der Zeichnungen

Nachfolgend wird die Erfindung unter Bezugnahme auf die anliegenden Zeichnungen anhand einem bevorzugten Ausführungsbeispiel näher erläutert.

In den Zeichnungen zeigen
- Fig. 1: einen Stator einer Bohrlochpumpe mit einer Mehrzahl Zähne, auf die jeweils eine Spule aufgebracht sind, in einer perspektivischen Ansicht auf ein erstes axiales Spulenende gemäß einem bevorzugten Ausführungsbeispiel,
- Fig. 2: den Stator der Bohrlochpumpe gemäß Fig. 1 in einer perspektivischen Ansicht auf ein gegenüberliegendes zweites axiales Spulenende,
- Fig. 3: den Stator gemäß Figs. 1 und 2 in einer jeweiligen Seitansicht auf das erstes axiales Spulenende und das zweite axiale Spulenende, und
- Fig. 4: eine Spule gemäß Figs. 1 bis 3 in einer perspektivischen Ansicht.

### Detaillierte Beschreibung der Ausführungsbespiele

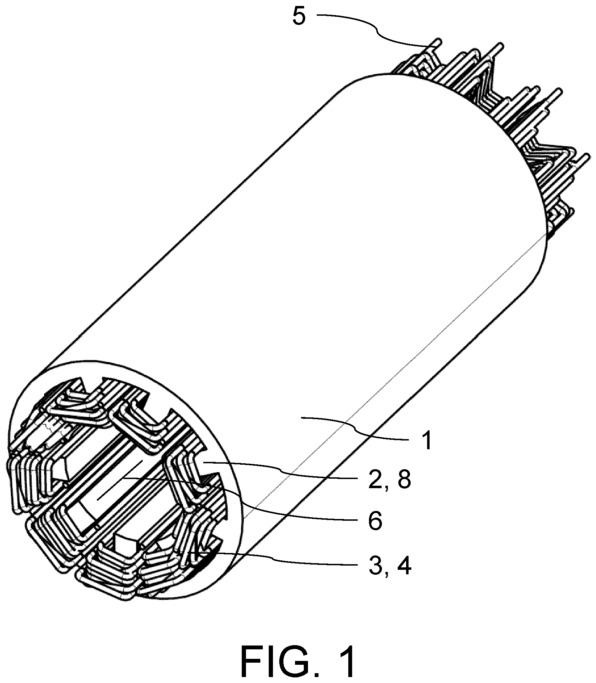

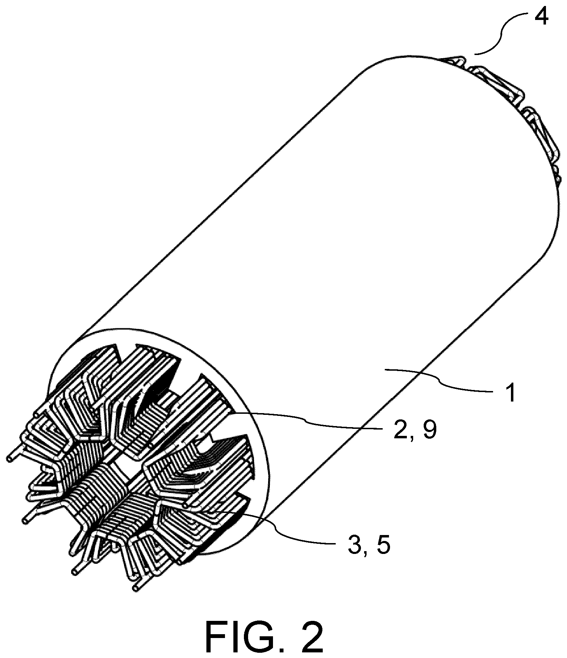

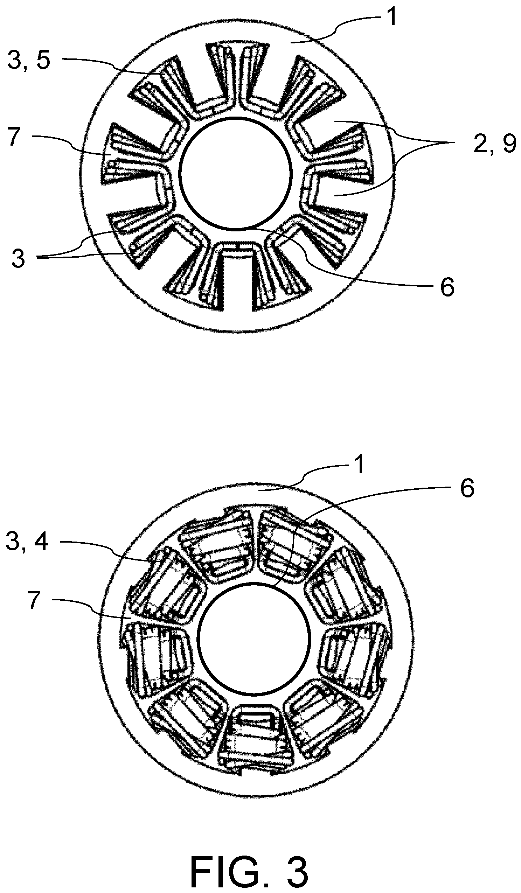

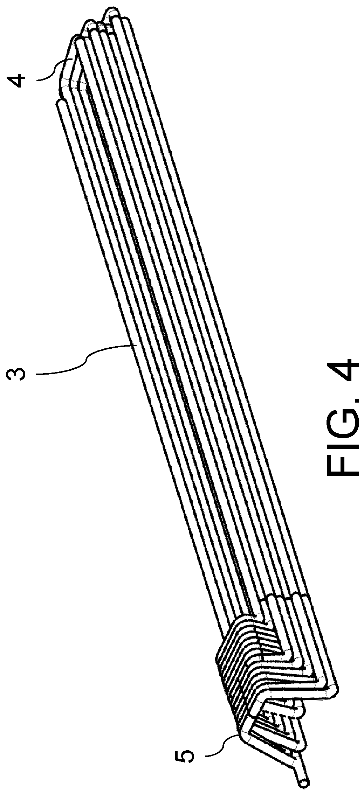

Fig. 1 zeigt einen Stator 1 einer Bohrlochpumpe mit einer Mehrzahl Zähne 2, auf die jeweils eine Spule 3 aufgebracht sind, in einer perspektivischen Ansicht auf ein erstes axiales Spulenende 4 gemäß einem bevorzugten Ausführungsbeispiel. Fig. 2 zeigt den Stator gemäß Fig. 1 in einer perspektivischen Ansicht auf ein gegenüberliegendes zweites axiales Spulenende 5. Fig. 3 zeigt den Stator 1 unten in Seitansicht auf das erste axiale Spulenende 4 und oben in Seitansicht auf das zweite axiale Spulenende 5. Schließlich zeigt Fig. 4 eine Spule 3 in einer perspektivischen Ansicht.

Die in Figs. 1 bis 3 gezeigte Bohrlochpumpe dient zum Fördern eines Fluids in einem nicht gezeigten Bohrloch, in das die Bohrlochpumpe abgesenkt ist. In der Regel ist ein Innendurchmesser des Bohrlochs nur geringfügig größer oder gleich dem Außendurchmesser der Bohrlochpumpe bzw. des Stator 1. Innerhalb der Bohrlochpumpe erstreckt sich der zylinderförmig gestaltete Stator 1 in axialer Richtung. Von den Stator 1 radial umschlossen und insofern innerhalb diesem angeordnet ist ein sich ebenfalls axial erstreckender Rotor 6 vorgesehen, in den Figuren nicht gezeigt und in Fig. 1 durch eine Linie 6 sowie in Fig. 3 durch einen Kreis 6 angedeutet.

Von der Mantelfläche des Stators 1 erstrecken sich in Richtung des Rotors 6 die Mehrzahl Zähne 2. Die Zähne 2 weisen jeweils eine quaderartige Form auf, zwischen denen in Seitansicht dreieckartige Nuten 7 ausgebildet sind, wie besonders gut in Fig. 3 zu erkennen. In jeder Nut 7 sind Windungen zweier benachbarter Spulen 3 angeordnet, wozu die Nuten 7 bzw. die Windungen jeweils passgenau dimensioniert sind. Ebenso können die zwischen zwei benachbarten Zähnen 2 radial zurückspringende sich axial erstreckende Nuten 7 eine quaderartige Form aufweisen, während die Zähne 2 in Seitansicht dreieckartig gestaltet sind.

Die Zähne 2 weisen jeweils ein erstes axiales Zahnende 8 und ein gegenüberliegendes zweites axiales Zahnende 9 auf. Das jeweilige erste axiale Spulenende 4 ist um ein jeweiliges erstes axiale Zahnende 8 axial außerhalb des jeweiligen Zahns 2 bzw. der jeweiligen Nut 7 herumgeführt, wie aus Figs. 1 und 3 unten zu erkennen. Mit anderen Worten überragt das jeweilige erste axiale Spulenende 4 den jeweiligen Zahn 2 nicht in radialer Richtung hin zum Rotor 6, jedoch die Nut 7 axial.

Demgegenüber ist das jeweilige zweite axiale Spulenende 5 im Bereich des zweiten axialen Spulenendes 9 orthogonal gebogen und erstreckt sich radial hin zum Rotor 6 derart, dass das gebogene zweite axiale Spulenende 5 den jeweiligen Zahn 2, in Seitansicht wie in Fig. 3 oben gezeigt, radial überragt, dabei jedoch axial neben dem zweiten axialen Zahnende 9 angeordnet ist und derart das zweite axiale Zahnende 9 axial außerhalb des jeweiligen Zahns 2 bzw. der jeweiligen Nut 7 umschließt, in der perspektivischen Ansicht in Fig. 2 gezeigt. Mit anderen Worten ist das jeweilige zweite axiale Spulenende 5 im Bereich des zweiten axialen Spulenendes 5 gebogen und dadurch gegenüber dem ersten axialen Spulenende 4 hin zum Rotor 6 radial versetzt zum radialen Umschließen wenigstens eines Zahns 2 angeordnet ist.

Zum Herstellen der Bohrlochpumpe wird das jeweilige zweite axiale Spulenende 5 im Bereich des zweiten axialen Spulenendes 5 orthogonal gebogen, bis dass das zweite axiale Spulenende 5 gegenüber dem ersten axialen Spulenende 4 hin zum Rotor 6 radial versetzt zum radialen Umschließen wenigstens eines Zahns 2 angeordnet ist. In der Folge wird die jeweilige Spule 2 in axialer Richtung mit dem gebogenen zweiten axialen Spulenendes 5 voran in wenigstens zwei Nuten 7 axial eingeschoben, bis dass das jeweilige erste axiale Spulenende 4 wenigstens ein erstes axiales Zahnende 8 und das jeweilige zweite axiale Spulenende 5 wenigstens ein zweites axiales Zahnende 9 axial umschließt.

Entsprechend kann die derart auf den Stator 1 aufgeschobene Spule 2 in entgegengesetzter Richtung axial aus dem Stator 1 bzw. den Nuten 7 wieder herausgeschoben werden, beispielsweise um eine defekte Spule 2 zu ersetzen.

Zum Herstellen der wie in Fig. 4 gezeigten in den Stator 1 axial einschiebbaren Spule 3 werden mehrere Wicklungen derart gewickelt, dass nach dem Aufschieben das jeweilige erste axiale Spulenende 4 wenigstens ein erstes axiales Zahnende 8 axial umschließen kann, das jeweilige zweite axiale Spulenende 5 wenigstens ein zweites axiales Zahnende 9 axial umschließen kann und das jeweilige zweite axiale Spulenende 5 im Bereich des jeweiligen zweiten axialen Zahnendes 9 wenigstens einen Zahn 2 in Richtung des Rotors 6 umschließen kann. Mit anderen Worten werden die Windungen in eine rechteckartige Form gewickelt, wobei ein U-förmiges Ende orthogonal in Bezug auf den verbeleibenden Teil des Rechtecks gebogen wird.

Mittels einer Umformlehre und eines Lackdrahtes können die Wicklungen fixiert werden. Ebenso kann eine Nadelwickler zum Fixieren der Wicklungen verwendet werden. Die derart gebogene Spule 3 wird in der Folge in einer nicht gezeigten Gießform laminiert. Das Verfahren wird für jede Spule 3 wiederholt. Zum Gewährleisten einer gleichmäßigen Dämmung können Abstandhalter aus Vergussmaterial und/oder durch eine Bandage in Form eines Tapes verwendet werden. Wenn auch in den Figuren nicht gezeigt, können die Spulen 3 jeweils aufweisend eine Mehrzahl Wicklungen im Bereich des ersten axialen Spulenendes 4 und im Bereich des zweiten axialen Spulenendes 5 überlappend und/oder ineinander verschachtelt vorgesehen sein.

Die vorbeschriebenen Ausführungen zu der Bohrlochpumpe gelten analog für einen Motor. Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Stator | 1 |
| Zahn | 2 |
| Spule | 3 |
| Erstes axiales Spulenende | 4 |
| Zweites axiales Spulenende | 5 |
| Rotor | 6 |
| Nut | 7 |
| Erstes axiales Zahnende | 8 |
| Zweites axiales Zahnende | 9 |

## Patentansprüche

1. Bohrlochpumpe mit einem sich axial erstreckenden Stator (1), einem in dem Stator (1) angeordneten und von dem Stator (1) radial umschlossenen sich axial erstreckenden Rotor (6) und einer Mehrzahl Spulen (3) mit jeweils einem ersten axialen Spulenende (4) und einem gegenüberliegenden zweiten axialen Spulenende (5), wobei
an dem Stator (1) abwechselnd eine Mehrzahl sich axial erstreckender, dem Rotor (6) zugewandter Zähne (2) mit jeweils einem ersten axialen Zahnende (8) und einem gegenüberliegenden zweiten axialen Zahnende (9) und zwischen zwei benachbarten Zähnen (2) radial zurückspringende sich axial erstreckende, die Spulen (3) aufnehmende Nuten (7) ausgebildet sind,
das jeweilige erste axiale Spulenende (4) wenigstens ein erstes axiales Zahnende (8) und das jeweilige zweite axiale Spulenende (5) wenigstens ein zweites axiales Zahnende (9) axial umschließt, **dadurch gekennzeichnet, dass** das jeweilige zweite axiale Spulenende (5) im Bereich des zweiten axialen Spulenendes (5) gebogen und dadurch gegenüber dem ersten axialen Spulenende (4) hin zum Rotor (6) radial versetzt zum radialen Umschließen wenigstens eines Zahns (2) angeordnet ist.

2. Bohrlochpumpe nach dem vorhergehenden Anspruch, wobei das jeweilige erste axiale Spulenende (4) und/oder das jeweilige zweite axiale Spulenende (5) axial außerhalb der Nuten (7) und/oder der Zähne (2) und/oder das jeweilige zweite axiale Spulenende (5) radial außerhalb der Nuten (7) und/oder der Zähne (2) angeordnet ist.

3. Bohrlochpumpe nach einem der vorhergehenden Ansprüche, wobei das jeweilige zweite axiale Spulenende (5) im Bereich des zweiten axialen Spulenendes (5) orthogonal in Richtung des Rotors (6) gebogen ist.

4. Bohrlochpumpe nach einem der vorhergehenden Ansprüche, wobei das erste axiale Spulenende (4) und/oder das zweite axiale Spulenende (5) das wenigstens eine erste axiale Zahnende (8) und/oder das wenigstens eine axiale zweite Zahnende (9) axial berührend umschließt und/oder das jeweilige zweite axiale Spulenende (5) zum radialen berührenden Umschließen wenigstens eines Zahns (2) angeordnet ist.

5. Bohrlochpumpe nach einem der vorhergehenden Ansprüche, wobei die Nuten (7) die Spulen (3) passgenau aufnehmen und/oder die Nuten (7) in radialer Richtung einen dreieckartigen Querschnitt aufweisen.

6. Bohrlochpumpe nach einem der vorhergehenden Ansprüche, wobei die Spulen (3) im Bereich des ersten axialen Spulenendes (4) und/oder im Bereich des zweiten axialen Spulenendes (5) überlappend und/oder ineinander verschachtelt angeordnet sind und/oder die Spulen (3) eine rechteckartige Form aufweisen.

7. Verfahren zum Aufbringen einer Mehrzahl Spulen (3) mit jeweils einem ersten axialen Spulenende (4) und einem gegenüberliegenden zweiten axialen Spulenende (5) auf einen sich axial erstreckenden Stator (1) einer Bohrlochpumpe mit einem in dem Stator (1) angeordneten und von dem Stator (1) radial umschlossenen sich axial erstreckenden Rotor (6), wobei
an dem Stator (1) abwechselnd eine Mehrzahl sich axial erstreckender, dem Rotor (6) zugewandter Zähne (2) mit jeweils einem ersten axialen Zahnende (8) und einem gegenüberliegenden zweiten axialen Zahnende (9) und zwischen zwei benachbarten Zähnen (2) radial zurückspringende sich axial erstreckende Nuten (7) zum Aufnehmen der Spulen (3) ausgebildet sind, mit den Schritten:
Biegen des jeweiligen zweiten axialen Spulenendes (5) im Bereich des zweiten axialen Spulenendes (5), bis dass das zweite axiale Spulenende (5) gegenüber dem ersten axialen Spulenende (4) hin zum Rotor (6) radial versetzt zum radialen Umschließen wenigstens eines Zahns (2) angeordnet ist, und
Aufschieben der jeweiligen Spule (3) in axialer Richtung mit dem gebogenen zweiten axialen Spulenende (5) voran in wenigstens zwei Nuten (7), bis dass das jeweilige erste axiale Spulenende (4) wenigstens ein erstes axiales Zahnende (8) und das jeweilige zweite axiale Spulenende (5) wenigstens ein zweites axiales Zahnende (9) axial umschließt.

8. Verfahren nach dem vorhergehenden Verfahrensanspruch, mit dem Schritt:
Wickeln von Wicklungen zum Erhalten der gebogenen Spule (3) derart, dass nach dem Aufschieben das jeweilige erste axiale Spulenende (4) wenigstens ein erstes axiales Zahnende (8) axial umschließen kann und das jeweilige zweite axiale Spulenende (5) im Bereich des jeweiligen zweiten axialen Zahnendes (9) wenigstens einen Zahn (2) radial in Richtung des Rotors (6) umschließen kann.

9. Verfahren nach einem der vorhergehenden Verfahrensansprüche, mit dem Schritt:
Anordnen des jeweiligen ersten axialen Spulenendes (4) und/oder des jeweiligen zweiten axialen Spulenende (5) derart, dass das erste axiale Spulenende (4) und/oder das zweite axiale Spulenende (5) axial außerhalb der Nuten (7) und/oder der Zähne (2) zu liegen kommt, und/oder des jeweiligen zweiten axialen Spulenendes (5) derart, dass das zweite axiale Spulenende (5) radial außerhalb der Nuten (7) und/oder der Zähne (2) zu liegen kommt.

10. Verfahren nach einem der vorhergehenden Verfahrensansprüche, mit dem Schritt:
Biegen des jeweiligen zweiten axialen Spulenendes (5) orthogonal in Richtung des Rotors (6).

11. Verfahren nach einem der vorhergehenden Verfahrensansprüche, mit dem Schritt:
Anordnen der Spulen (3) im Bereich des ersten axialen Spulenendes (4) und/oder im Bereich des zweiten axialen Spulenendes (5) überlappend und/oder ineinander verschachtelt und/oder in einer rechteckartigen Form.

12. Verfahren nach einem der vorhergehenden Verfahrensansprüche, mit dem Schritt:
Laminieren der gebogenen Spule (3) in einer Gießform zum Erhalten der gebogenen Spule (3).

## Claims

1. A downhole pump comprising an axially extending stator (1), an axially extending rotor (6), which is disposed in the stator (6) and is radially surrounded by the stator (1), and a plurality of coils (3) each with a first axial coil end (4) and an opposite, second axial coil end (5), wherein
a plurality of axially extending teeth (2), which face the rotor (6) and each have a first axial tooth end (8) and an opposite, second axial tooth end (9), and axially extending grooves (7), which are set back radially between two adjacent teeth (2) and receive the coils (3), are formed in alternation on the stator (1),
the respective first axial coil end (4) axially surrounds at least one first axial tooth end (8) and the respective second axial coil end (5) axially surrounds at least one second axial tooth end (9), **characterised in that** the respective second axial coil end (5) is bent in the region of the second axial coil end (5) and thus is disposed radially offset relative to the first axial coil end (4) towards the rotor (6) to radially surround at least one tooth (2).

2. The downhole pump according to the preceding claim, wherein the respective first axial coil end (4) and/or the respective second axial coil end (5) is disposed axially outside the grooves (7) and/or the teeth (2) and/or the respective second axial coil end (5) is disposed radially outside the grooves (7) and/or the teeth (2).

3. The downhole pump according to any one of the preceding claims, wherein the respective second axial coil end (5) is bent in the region of the second axial coil end (5) orthogonally in the direction of the rotor (6).

4. The downhole pump according to any one of the preceding claims, wherein the first axial coil end (4) and/or the second axial coil end (5) surrounds the at least one first axial tooth end (8) and/or the at least one axial second tooth end (9) with axial contact and/or the respective second axial coil end (5) is disposed so as to surround at least one tooth (2) with radial contact.

5. The downhole pump according to any one of the preceding claims, wherein the grooves (7) receive the coils (3) with an accurate fit and/or the grooves (7) have a triangular crosssection in the radial direction.

6. The downhole pump according to any one of the preceding claims, wherein the coils (3), in the region of the first axial coil end (4) and/or in the region of the second axial coil end (5), are disposed overlapping and/or nested one inside the other and/or the coils (3) have a rectangular shape.

7. A method for applying a plurality of coils (3) each with a first axial coil end (4) and an opposite, second axial coil end (5) to an axially extending stator (1) of a downhole pump with an axially extending rotor (6), which is disposed in the stator (1) and is radially surrounded by the stator (1), wherein
a plurality of axially extending teeth (2), which face the rotor (6) and each have a first axial tooth end (8) and an opposite, second axial tooth end (9), and axially extending grooves (7) for receiving the coils (3), which grooves are set back radially between two adjacent teeth (2), are formed in alternation on the stator (1), said method having the steps of:
bending the respective second axial coil end (5) in the region of the second axial coil end (5) until the second axial coil end (5) is disposed radially offset relative to the first axial coil end (4) towards the rotor (6) to radially surround at least one tooth (2), and
sliding the respective coil (3) in the axial direction with the bent second axial coil end (5) at the front into at least two grooves (7) until the respective first axial coil end (4) axially surrounds at least one first axial tooth end (8) and the respective second axial coil end (5) axially surrounds at least one second axial tooth end (9).

8. The method according to the preceding method claim, comprising the step of:
winding turns to obtain the bent coil (3) in such a way that, after having been slid on, the respective first axial coil end (4) may axially surround at least one first axial tooth end (8) and the respective second axial coil end (5), in the region of the respective second axial tooth end (9) may radially surround at least one tooth (2) in the direction of the rotor (6).

9. The method according to any one of the preceding method claims, comprising the step of:
arranging the respective first axial coil end (4) and/or the respective second axial coil end (5) in such a way that the first axial coil end (4) and/or the second axial coil end (5) comes to lie axially outside the grooves (7) and/or the teeth (2), and/or the respective second axial coil end (5) in such a way that the second axial coil end (5) comes to lie radially outside the grooves (7) and/or the teeth (2).

10. The method according to any one of the preceding method claims, comprising the step of:
bending the respective second axial coil end (5) orthogonally in the direction of the rotor (6).

11. The method according to any one of the preceding method claims, comprising the step of:
disposing the coils (3) in an overlapping manner and/or nested one inside the other and/or in a rectangular shape in the region of the first axial coil end (4) and/or in the region of the second axial coil end (5).

12. The method according to any one of the preceding method claims, comprising the step of:
laminating the bent coil (3) in a casting mould to obtain the bent coil (3).

## Revendications

1. Pompe de fond comprenant un stator (1) à extension axiale, un rotor (6) à extension axiale, qui est disposé dans le stator (6) et est entouré de manière radiale par le stator (1), et une pluralité de bobines (3), chacune avec une première extrémité de bobine axiale (4) et une seconde extrémité de bobine axiale (5) opposée, dans laquelle
une pluralité de dents (2) à extension axiale, qui font face au rotor (6) et ont chacune une première extrémité de dent axiale (8) et une seconde extrémité de dent axiale (9) opposée, et des rainures (7) à extension axiale, qui sont installées en arrière de manière radiale entre deux dents (2) adjacentes et accueillent les bobines (3), sont formées en alternance sur le stator (1),
la première extrémité de bobine axiale (4) respective entoure de manière axiale au moins une première extrémité de dent axiale (8) et la seconde extrémité de bobine axiale (5) respective entoure de manière axiale au moins une seconde extrémité de dent axiale (9), **caractérisée en ce que** la seconde extrémité de bobine axiale (5) respective est pliée dans la région de la seconde extrémité de bobine axiale (5) et est donc disposée décalée de manière radiale par rapport à la première extrémité de bobine axiale (4) vers le rotor (6) pour entourer de manière radiale au moins une dent (2).

2. Pompe de fond selon la revendication précédente, dans laquelle la première extrémité de bobine axiale (4) respective et/ou la seconde extrémité de bobine axiale (5) respective sont disposées de manière axiale à l'extérieur des rainures (7) et/ou des dents (2) et/ou la seconde extrémité de bobine axiale (5) respective est disposée de manière radiale à l'extérieur des rainures (7) et/ou des dents (2).

3. Pompe de fond selon l'une quelconque des revendications précédentes, dans laquelle la seconde extrémité de bobine axiale (5) respective est pliée dans la région de la seconde extrémité de bobine axiale (5) de manière orthogonale dans la direction du rotor (6).

4. Pompe de fond selon l'une quelconque des revendications précédentes, dans laquelle la première extrémité de bobine axiale (4) et/ou la seconde extrémité de bobine axiale (5) entourent l'au moins une première extrémité de dent axiale (8) et/ou l'au moins une seconde extrémité de dent axiale (9) avec contact axial et/ou la seconde extrémité de bobine axiale (5) respective est disposée de manière à entourer au moins une dent (2) avec contact radial.

5. Pompe de fond selon l'une quelconque des revendications précédentes, dans laquelle les rainures (7) accueillent les bobines (3) avec un ajustement exact et/ou les rainures (7) ont une section transversale triangulaire dans la direction radiale.

6. Pompe de fond selon l'une quelconque des revendications précédentes, dans laquelle les bobines (3), dans la région de la première extrémité de bobine axiale (4) et/ou dans la région de la seconde extrémité de bobine axiale (5), sont disposées de manière superposée et/ou imbriquée l'une dans l'autre et/ou les bobines (3) ont une forme rectangulaire.

7. Procédé d'application d'une pluralité de bobines (3), chacune avec une première extrémité de bobine axiale (4) et une seconde extrémité de bobine axiale (5) opposée, à un stator (1) à extension axiale d'une pompe de fond avec un rotor (6) à extension axiale, qui est disposé dans le stator (1) et est entouré de manière radiale par le stator (1), dans lequel
une pluralité de dents (2) à extension axiale, qui font face au rotor (6) et ont chacune une première extrémité de dent axiale (8) et une seconde extrémité de dent axiale (9) opposée, et des rainures (7) à extension axiale destinées à accueillir les bobines (3), lesquelles bobines sont installées en arrière de manière radiale entre deux dents (2) adjacentes, sont formées en alternance sur le stator (1), ledit procédé ayant les étapes consistant à :
plier la seconde extrémité de bobine axiale (5) respective dans la région de la seconde extrémité de bobine axiale (5) jusqu'à ce que la seconde extrémité de bobine axiale (5) soit disposée décalée de manière radiale par rapport à la première extrémité de bobine axiale (4) vers le rotor (6) pour entourer de manière radiale au moins une dent (2), et
faire glisser la bobine (3) respective dans la direction axiale avec la seconde extrémité de bobine axiale (5) pliée au niveau de l'avant dans au moins deux rainures (7) jusqu'à ce que la première extrémité de bobine axiale (4) respective entoure de manière axiale au moins une première extrémité de dent axiale (8) et la seconde extrémité de bobine axiale (5) respective entoure de manière axiale au moins une seconde extrémité de dent axiale (9).

8. Procédé selon la revendication de procédé précédente, comprenant l'étape consistant à :
enrouler des tours pour obtenir la bobine (3) pliée de telle sorte que, après avoir été glissée, la première extrémité de bobine axiale (4) respective peut entourer de manière axiale au moins une première extrémité de dent axiale (8) et la seconde extrémité de bobine axiale (5) respective, dans la région de la seconde extrémité de dent axiale (9) respective, peut entourer de manière radiale au moins une dent (2) dans la direction du rotor (6).

9. Procédé selon l'une quelconque des revendications de procédé précédentes, comprenant l'étape consistant à :
agencer la première extrémité de bobine axiale (4) respective et/ou la seconde extrémité de bobine axiale (5) respective de telle sorte que la première extrémité de bobine axiale (4) et/ou la seconde extrémité de bobine axiale (5) viennent reposer de manière axiale à l'extérieur des rainures (7) et/ou des dents (2), et/ou la seconde extrémité de bobine axiale (5) respective de telle sorte que la seconde extrémité de bobine axiale (5) vient reposer de manière radiale à l'extérieur des rainures (7) et/ou des dents (2).

10. Procédé selon l'une quelconque des revendications de procédé précédentes, comprenant l'étape consistant à :
plier la seconde extrémité de bobine axiale (5) respective de manière orthogonale dans la direction du rotor (6).

11. Procédé selon l'une quelconque des revendications de procédé précédentes, comprenant l'étape consistant à :
disposer les bobines (3) d'une manière superposée et/ou imbriquée l'une dans l'autre et/ou sous une forme rectangulaire dans la région de la première extrémité de bobine axiale (4) et/ou dans la région de la seconde extrémité de bobine axiale (5).

12. Procédé selon l'une quelconque des revendications de procédé précédentes, comprenant l'étape consistant à :
laminer la bobine (3) pliée dans un moule de moulage pour obtenir la bobine (3) pliée.
